(19) Europäisches Patentamt
European Patent Office
Office européen des brevets

(11) **EP 2 299 302 B1**

(12) **EUROPEAN PATENT SPECIFICATION**

(45) Date of publication and mention of the grant of the patent:
**07.09.2016  Bulletin 2016/36**

(51) Int Cl.:
*G02B 6/028* $^{(2006.01)}$      *G02B 6/036* $^{(2006.01)}$

(21) Application number: **10175717.7**

(22) Date of filing: **08.09.2010**

(54) **Multimode optical fibre having improved bending losses**

Optische Multimodefaser mit verbesserten Krümmungsverlusten

Fibre optique multimode ayant des pertes par courbure améliorées

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009  FR 0904305**
**11.09.2009  US 241592 P**

(43) Date of publication of application:
**23.03.2011  Bulletin 2011/12**

(73) Proprietor: **Draka Comteq B.V.**
**1083 HJ Amsterdam (NL)**

(72) Inventors:
• **Molin, Denis**
**91210 Draveil (FR)**

• **Sillard, Pierre**
**78150 Le Chesnay (FR)**

(74) Representative: **Algemeen Octrooi- en Merkenbureau B.V.**
**P.O. Box 645**
**5600 AP Eindhoven (NL)**

(56) References cited:
**WO-A1-2006/010798      WO-A1-2009/078962**
**WO-A1-2010/138653      JP-A- 2006 078 543**

• **KASHIMA N ET AL: "Transmission characteristics of graded-index optical fibers with a lossy outer layer" APPLIED OPTICS USA, vol. 17, no. 8, 15 April 1978 (1978-04-15) , pages 1199-1207, XP001622678 ISSN: 0003-6935**

**Description**

The present invention relates to the field of optical fibre transmissions, and more specifically, to a multimode optical fibre having reduced bending losses without any significant increase in its numerical aperture.

In standard fashion, an optical fibre is composed of an optical core the function of which is to transmit and optionally amplify an optical signal, and an outer optical cladding the function of which is to confine the optical signal within the core. To this end, the refractive indices of the core $n_c$ and the cladding $n_g$ are such that $n_c > n_g$.

The refractive index profile denotes the graph of the function which associates the refractive index with the radius of the optical fibre. In standard fashion, the distance to the centre of the optical fibre is shown on the x-axis, and on the y-axis, the difference between the refractive index at that radial position and the refractive index of the outer optical cladding. Generally, the refractive index profile is qualified according to its appearance. Thus the refractive index profile is described in terms of a "step", "trapezium", "triangle", or "alpha" for graphs which have step, trapezium, triangle, or graded shapes respectively. These curves are representative of the theoretical or set profile of the fibre, while the manufacturing constraints of the fibre may result in a slightly different profile.

Two main types of optical fibres exist, being multimode fibres and single mode fibres. In a multimode fibre, for a given wavelength, several optical modes are propagated simultaneously along the optical fibre, whereas in a single mode fibre modes of a higher order are strongly attenuated.

Multimode graded-index fibres with an "alpha" profile of the central core have been used for many years. Their characteristics have been described in particular in "Multimode theory of graded-core fibres" by D. Gloge et al., Bell system Technical Journal 1973, pp 1563-1578, and summarized in "Comprehensive theory of dispersion in graded-index optical fibers" by G. Yabre, Journal of Lightwave Technology, February 2000, Vol. 18, No. 2, pp 166-177.

A graded-index profile, or alpha-index profile ($\alpha$) - these two terms are equivalent - can be defined by a relationship between the refractive index value n at a certain point as a function of the distance r from this point to the centre of the optical fibre:

$$n = n_1 \sqrt{1 - 2\Delta \left( \frac{r}{r_1} \right)^{\alpha}}$$

with $\alpha \geq 1$;

$n_1$, the maximum index of the multimode core;
$r_1$, the radius of the multimode core; and

$$\Delta = \frac{\left( n_1^2 - n_0^2 \right)}{2 n_1^2}$$

where $n_0$ is the minimum index of the multimode central core, generally corresponding to the index of the outer optical cladding (most often made of silica).

However each mode is propagated with its own propagation constant with which an effective refractive index $n_{eff}$ can be associated, which is a function of the refractive index profile of the optical fibre and the wavelength.

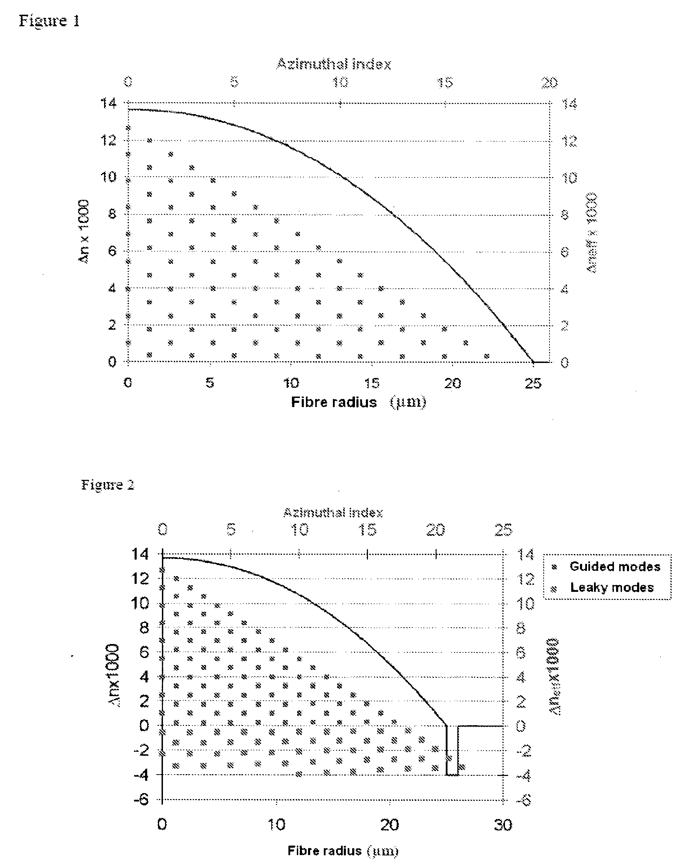

Figure 1 shows the refractive index profile of an $\alpha$-profile optical fibre according to the prior art. The lower x-axis shows the radius of the optical fibre, and the y-axis on the left shows the refractive index of the $\alpha$-profile of the optical fibre. A multimode $\alpha$-profile optical fibre therefore has a central core profile with a rotational symmetry such that in any radial direction the value of the refractive index decreases continuously from the centre of the optical fibre to its periphery. The graph also shows the modes which are propagated in the optical fibre. The y-axis on the right shows the relative effective refractive indices of the propagation modes, i.e. the difference between the effective refractive index of the mode and the refractive index of the outer optical cladding. A reference called the azimuthal index, shown on the upper x-axis, corresponds to each mode. Typically the modes collect together in groups of visible modes in a horizontal direction of the graph. For example the fibre shown comprises 18 mode groups.

The numerical aperture (NA) of an optical fibre is defined by the expression:

$$NA = \sqrt{n_{eff,\max}^2 - n_{eff,\min}^2}$$

where $n_{eff,min}$ and $n_{eff,max}$ are respectively the minimum and maximum effective refractive indices of the modes comprised in the signal measured at the fibre output under OFL (overfilled launch) conditions, i.e. when the excitation of the signal at the fibre input is uniform over all the propagation modes.

However a good approximation of the numerical aperture is obtained with the expression:

$$ON = \sqrt{n_{\max}^2 - n_{\min}^2}$$

where $n_{max}$ and $n_{min}$ are respectively the maximum and minimum refractive indices of the optical fibre refractive index profile.

It is known to reduce the bending losses of a multimode graded-index optical fibre by adding a depressed trench between the central core and the outer optical cladding. However, the addition of such a depressed trench results in the development of additional propagation modes known as leaky modes.

Figure 2 shows the refractive index profile of the optical fibre according to the prior art as shown in Figure 1, to which a depressed trench has been added between the central core and the outer optical cladding. Additional propagation modes are observed with respect to Figure 1, situated below the zero value of the relative effective refractive index. These additional propagation modes or leaky modes are placed in 5 mode groups. The leaky modes have effective refractive indices which are lower than those of the guided modes. This leads to an increase in the numerical aperture NA in the graded-index optical fibres comprising a depressed trench, in comparison with the graded-index optical fibres without a depressed trench. Such a difference in numerical aperture can lead to losses during connections within a system comprising graded-index fibres with a depressed trench and graded-index fibres without a depressed trench. Hence the addition of a depressed trench to a graded-index profile gives rise to an increase in the NA, which is undesirable. Therefore, it is desirable to limit the increase of the NA as a result of the addition of a depressed trench.

The documents US-A-2008/0166094 and WO-A-2008/085851 disclose the use of a depressed trench for reducing the bending losses in a graded-index optical fibre. However, these documents do not state how to ensure that the numerical aperture increases only slightly with respect to the numerical aperture of a graded-index fibre without a depressed trench. In other words, how to avoid a large increase in the numerical aperture due to the addition of a depressed trench.

The document WO-A-2006/010798 describes an optical fibre comprising a graded-index central core and a depressed trench. The graded-index profile of the central core is extended beneath the refractive index of the outer optical cladding, as far as the bottom of the depressed trench. In other words, there is no abrupt drop in the refractive index at the start of the depressed trench, but instead there is a gradual decrease untill the bottom of the depressed trench is reached. The extension of the alpha-shaped central core beneath the refractive index of the outer optical cladding as far as the bottom of the depressed trench limits the reduction in the bending losses while further increasing the numerical aperture. This is hence undesirable. Furthermore, document WO-A-2006/010798 does not indicate how to ensure that the numerical aperture increases only slightly with respect to the numerical aperture of a graded-index optical fibre without a depressed trench.

WO 2009078962 relates to a bend resistant multimode optical fiber comprising: a graded index glass core; and an inner cladding surrounding and in contact with the core, and a second cladding comprising a depressed-index annular portion surrounding the inner cladding, said depressed-index annular portion having a refractive index delta less than about -0.2 % and a width of at least 1 micron, wherein the width of said inner cladding is at least 0.5 microns and less than 4 microns.

WO 2010/138653 relates to an optical fiber which is multimoded at 850 nm, comprising a graded index multimode glass core having an optical core radius between 21 and 27 microns and a maximum refractive index delta at 850 nm, delta1MAX, a depressed index annular region surrounding said multimode core exhibiting minimum refractive index delta at 850 nm, delta2MIN, wherein the inner boundary of said depressed index region is an extension of the graded index core, the depressed region having a moat volume greater than 105 %-urn$^2$, and an outer cladding region surrounding said depressed index region and exhibiting a refractive index delta at 850 nm, A3, wherein delta1MAX > A3 > delta2MIN, and wherein the fiber exhibits (a) an overfilled bandwidth of greater than 1.5 GHz-km at a wavelength of 850 nm, and (b) a 1 turn 10 mm diameter mandrel wrap attenuation increase at a wavelength of 1550 nm of less than 0.28 dB.

A need therefore exists for a graded-index optical fibre having reduced bending losses, without however showing a significant increase in its numerical aperture.

For this purpose, the invention proposes a multimode optical fibre according to claim 1.

According to an embodiment, the fibre has an enlargement of less than 0.015 of the numerical aperture with respect to a fibre having the same index profile but without the depressed trench.

According to an embodiment, the optical fibre has an enlargement of less than 0.010 of the numerical aperture with respect to an optical fibre having the same index profile but without the depressed trench.

According to an embodiment, the optical fibre has a central core of diameter 62.5 $\pm$ 3 $\mu$m and a numerical aperture of 0.275 $\pm$ 0.015.

According to an embodiment, the optical fibre has a central core of diameter 50 $\pm$ 3 $\mu$m and a numerical aperture of 0.2 $\pm$ 0.015.

According to an embodiment, the optical fibre has a refractive index difference of the depressed trench $\Delta$nt with respect to the outer optical cladding that is between -6 x 10$^{-3}$ and -15 x 10$^{-3}$.

According to an embodiment, the optical fibre has a refractive index difference of the depressed trench $\Delta$nt with respect to the outer optical cladding that is between -7x10$^{-3}$ and -10x10$^{-3}$.

According to an embodiment, the optical fibre has a width Wt of the depressed trench that is smaller than 4.5 $\mu$m, preferbly equal to or larger than 1.5 $\mu$m or equal to or larger than 2 $\mu$m.

According to an embodiment, the the difference between radius $r_2$ of the inner cladding and radius $r_1$ of the central core (i.e. the width of the inner cladding) is comprised between 0 and 5 $\mu$m.

According to an embodiment, the optical fibre has a difference between radius $r_2$ of the inner cladding and radius $r_1$ of the central core that is 0 $\mu$m (i.e. $r_1 = r_2$) and thus the depressed trench is in direct contact with the central core.

According to an embodiment, the optical fibre has bending losses at a wavelength of 850 nm for two turns around a radius of curvature of 15 mm reduced by at least 40% with respect to an optical fibre having the same index profile but without the depressed trench.

According to an embodiment, the optical fibre has bending losses at a wavelength of 850 nm for two turns around a radius of curvature of 10 mm reduced by at least 30% with respect to an optical fibre having the same index profile but without the depressed trench.

According to an embodiment, the optical fibre has bending losses at a wavelength of 850 nm for two turns around a radius of curvature of 7.5 mm reduced by at least 20% with respect to an optical fibre having the same index profile but without the depressed trench.

According to an embodiment, the optical fibre has bending losses at a wavelength of 850 nm for two turns around a radius of curvature of 5 mm reduced by at least 20% with respect to an optical fibre having the same index profile but without the depressed trench.

Other characteristics and advantages of the invention will become apparent on reading the following detailed description of the embodiments of the invention, given by way of example only and with reference to the drawings which show:

Figure 1, a refractive index profile of an optical fibre having an alpha ($\alpha$) refractive index profile and the modes propagating in the optical fibre;

Figure 2, a refractive index profile of the optical fibre of Figure 1 comprising an added depressed trench and the modes propagating in the optical fibre;

Figure 3, an example of an refractive index profile of an optical fibre according to the prior art.

Figure 4, a graph showing the leakage losses of the leaky modes as a function of the relative effective refractive indices of the modes, in the optical fibre described in Figure 2;

Figure 5, the mode power distribution in the modes propagating in optical fibres having different depressed trench volumes, as a function of the principal mode number of the modes;

Figure 6, the resultant increase in the numerical aperture induced in an optical fibre to which a depressed trench has been added, as a function of the volume of the depressed trench;

Figure 7, the bending losses for 2 turns around a radius of curvature Rc varying between 5 mm and 15 mm, as a function of the volume of the depressed trench;

Figure 8, a further example of a refractive index profile of an optical fibre according to the present invention;

Figure 9, showing the mode power distribution after 2 m under OFL conditions of trench-assisted multimode fibers with a trench width of 2 $\mu$m and different depths.

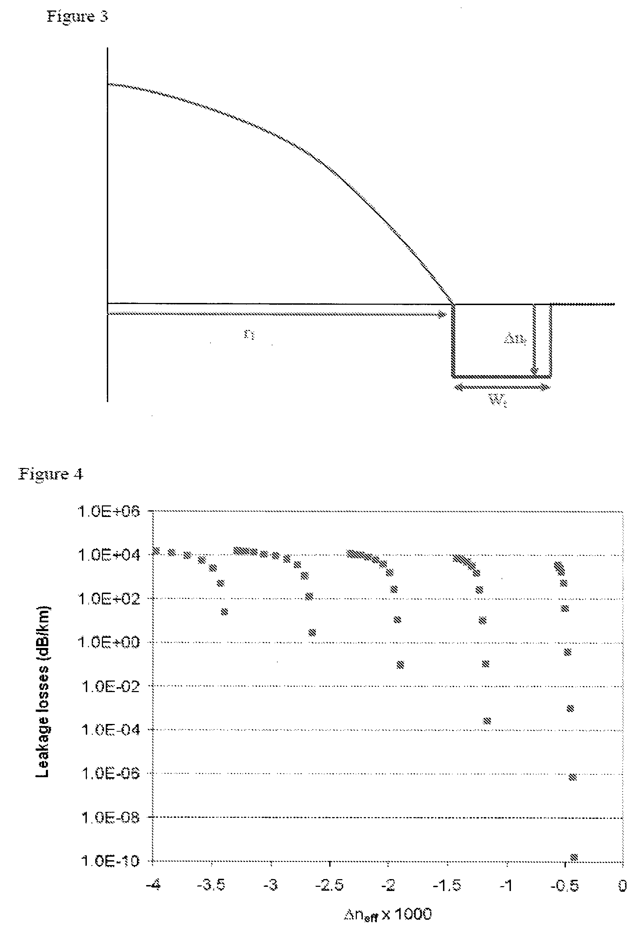

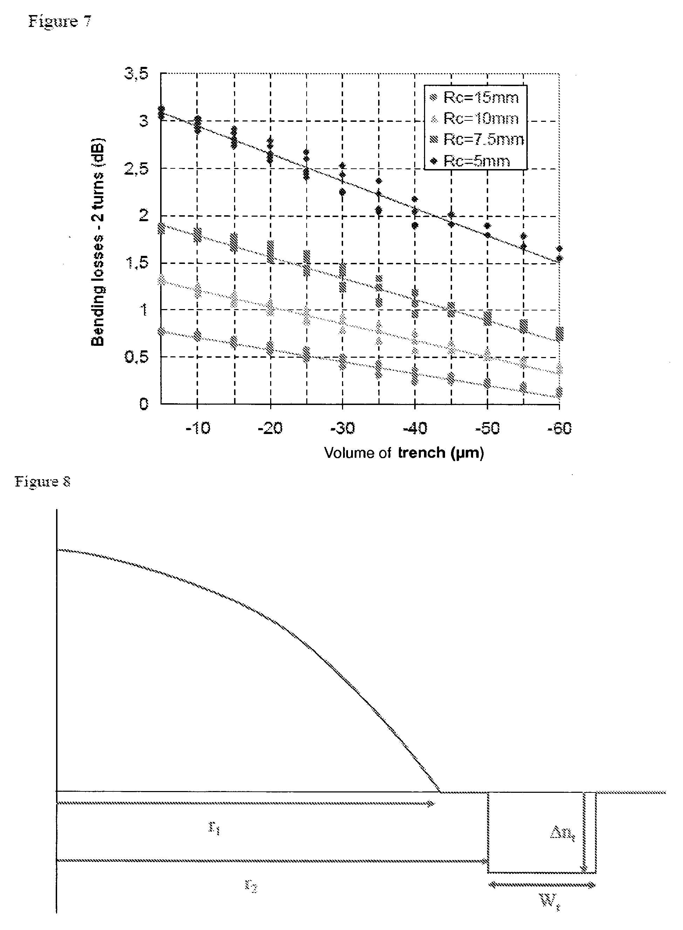

The refractive index profile of an optical fibre according to the prior art will be better described with reference to Figure 3. The refractive index profile of an optical fibre according to the present invention will be better described with reference to figure 8. The optical fibre according to the prior art is a multimode optical fibre comprising a central core having a radius $r_1$ and an alpha index profile with respect to an outer optical cladding, and a depressed trench having a width $W_t$ ($\mu$m) and an index difference $\Delta n_t$ between its refractive index and the refractive index of the outer optical cladding. The volume $V$ ($\mu$m) of the depressed trench is defined by the expression $V = 1000 \times W_t \times \Delta n_t$. The optical fibre according to the present invention is a multimode optical fibre comprising a central core having a radius $r_1$ and an alpha index profile with respect to an outer optical cladding, an inner cladding having a radius $r_2$ and a refractive index difference $\Delta n_2$ with respect to the outer optical cladding, and a depressed trench having a width $W_t$ ($\mu$m) and an index difference $\Delta n_t$ between its refractive index and the refractive index of the outer optical cladding. The volume $V$ ($\mu$m) of the depressed trench is defined by the expression $V = 1000 \times W_t\, \Delta n_t$. The optical fibre according to the invention is such that the refractive index difference between the end of the graded central core and the outer optical cladding is zero and the volume $V$ of the depressed trench is comprised between -40 $\mu$m and -30 $\mu$m. The range of values of the volume $V$ of the depressed trench and the refractive index difference between the end of the graded central core and the outer optical cladding ensure that the leaky modes which are propagated in the depressed trench have a limited power. Thus, the leaky modes contribute to a limited extent to the signal transmitted by the optical fibre according to the invention, and the numerical aperture is increased to a limited extent in comparison with a graded-index fibre without a depressed trench. Thus, the graded-index optical fibre according to the present invention has reduced bending losses, without however exhibiting a significant increase in its numerical aperture. The advantages of the optical fibre according to the invention are explained in greater detail below.

In a multimode graded-index optical fibre comprising a depressed trench, the leaky modes experience leakage losses during their propagation in the optical fibre. Figure 4 shows the leakage losses in dB/m experienced by the leaky modes as a function of their relative effective refractive indices in the optical fibre the refractive index profile of which is described in Figure 2. The five successive graphs show each of the different mode groups.

By comparing the graphs of the mode groups, it is observed that the mode groups having effective refractive indices of less than -2.5x10$^{-3}$ have modes in which the leakage losses are greater than 1 dB/m. However, the mode groups having effective refractive indices greater than -2.5x10$^{-3}$ have modes the leakage losses of which can be less than 1 dB/m. Thus the lower the effective refractive index of the mode group, the higher the leakage losses. As a result, the leaky mode groups contribute differently to the signal propagating along the fibre, depending on the value of their effective refractive index.

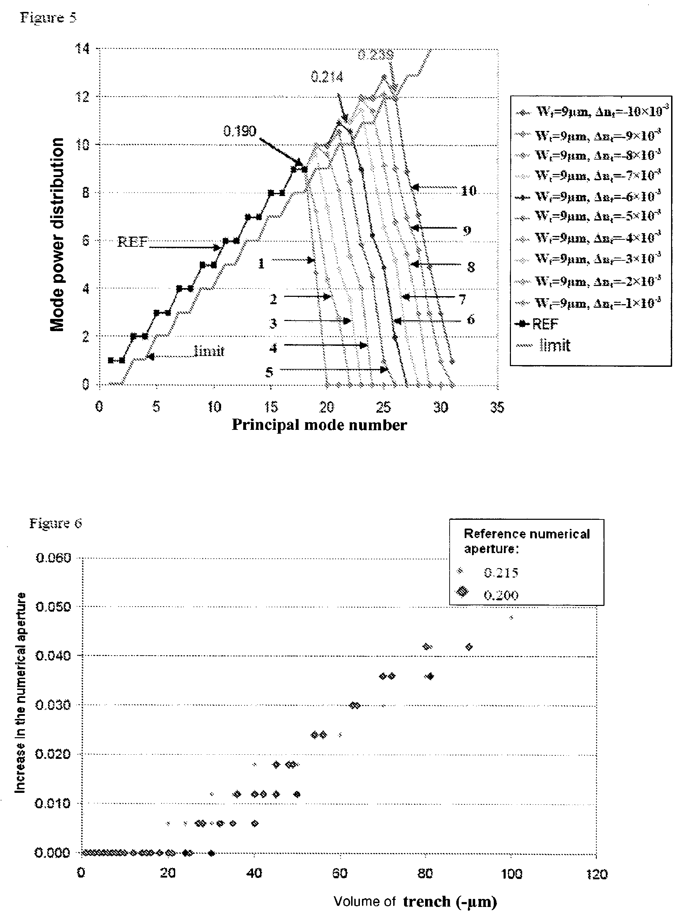

The influence of the leaky modes on the calculation of the numerical aperture will be better understood with reference to Figure 5. Figure 5 shows the power distribution in the mode groups after propagation for two metres in an optical fibre having experienced an excitation in OFL (overfill launch) conditions, i.e. with a uniform excitation on all the mode groups. The x-axis shows the principal mode number or order of each mode group.

Curves 1 to 10 are collected on graded-index optical fibres having a depressed trench width of 9 $\mu$m and a refractive index difference $\Delta n_t$ comprised between -1$\times$10$^{-3}$ and -10$\times$10$^{-3}$. In other words, the curves 1 to 10 correspond to fibres the volume of the depressed trench of which varies between -9 and -90 $\mu$m.

The curve in Figure 5 denoted "REF" is the reference curve characteristic of a graded-index optical fibre without a depressed trench. It is observed that the 18 first mode groups have an increasing power contribution. The 18$^{th}$ mode group is the mode group for which the effective refractive index is used as minimum effective refractive index $n_{eff,min}$ when calculating the numerical aperture of the optical fibre. A numerical aperture of 0.190 is then found.

By adding a depressed trench to the reference fibre, further mode groups are added. For example, curve 6 corresponds to a reference fibre to which a trench of width 9 $\mu$m and index difference -6$\times$10$^{-3}$ has been added. It is observed that curve 6 has 8 additional leaky mode groups in comparison with the reference curve, i.e. the order 19 to 26 mode groups. When calculating the numerical aperture of the optical fibre corresponding to curve 6, the order 26 mode group must be the one whose effective refractive index is used as minimum effective refractive index $n_{eff,min}$.

However, when calculating the numerical aperture, it is considered that the contribution of a mode group is significant if the following relationship is satisfied:

$$\sum_{i=1}^{n} 10^{-2\alpha_i} > E\left(\frac{m-1}{2}\right)$$

where n is the number of modes in the mode group of order m, $\alpha_i$ is the leakage loss in dB/m of the i$^{th}$ mode of the mode group of order m, and $E\left(\dfrac{m-1}{2}\right)$ is the integer part of the fraction $\dfrac{m-1}{2}$.

This relationship can be also shown graphically by means of the limiting curve shown in the form of steps in Figure 5, representing the function $E\left(\dfrac{m-1}{2}\right)$. Thus, for an optical fibre, the last mode group having its point representing its power distribution situated above the limiting curve, is the mode group the effective refractive index of which can be used as $n_{eff,min}$ when calculating the numerical aperture of the optical fibre.

In the example of the optical fibre having a depressed trench having a width of 9 $\mu$m and a refractive index difference with the outer optical cladding of -6x10$^{-3}$, the last mode group of which the point representing its power distribution is located above the limiting curve, is the mode group of order 22. By considering the effective refractive indices of the mode groups of order 1 and 22, a numerical aperture of 0.214 is found. The numerical aperture value thus obtained is less than that which would be obtained by considering the effective refractive index of the mode group of order 26 which is the last mode group propagating in the optical fibre. However, this value reflects the actual numerical aperture of the multimode optical fibre comprising a depressed trench under operating conditions.

Thus, the attenuation experienced by the higher-order mode groups allows them to be ignored when calculating the numerical aperture of the fibre.

The curves in Figure 5 also show that the number of leaky mode groups added by a depressed trench depends on the volume of the depressed trench.

The optical fibre according to the present invention has a depressed trench volume that is comprised between -40 $\mu$m and -30 $\mu$m which makes it possible to limit the increase in the numerical aperture with respect to an optical fibre without a depressed trench, while allowing a significant reduction in the bending losses.

The value range of the volume of the depressed trench will be better understood by referring to the graphs of Figures 6 and 7.

The graph of Figure 6 shows on the y axis, the difference between the numerical aperture of an $\alpha$-profile multimode optical fibre having a depressed trench, and a reference multimode optical fibre i.e. having an equivalent alpha ($\alpha$) profile without a depressed trench. The volume of the depressed trench is shown on the x axis. The graph shows the results for a reference optical fibre having a numerical aperture of 0.200, and a reference optical fibre having a numerical aperture of 0.215.

The graph of Figure 7 shows on the y axis, the bending losses at a wavelength of 850 nm for 2 turns with radii of curvature Rc of 5 mm, 7.5 mm, 10 mm, and 15 mm, on an $\alpha$-profile multimode optical fibre having a depressed trench. The volume of the depressed trench is shown on the x axis.

On both graphs, several pairs ($W_t$, $\Delta n_t$) are shown for the same volume value.

In comparison with an optical fibre having a similar refractive index profile but without a depressed trench, it is observed that an $\alpha$-profile multimode optical fibre having a depressed trench with a volume of less than -40 $\mu$m has bending losses for 2 turns @ 850 nm which are reduced by at least 60% with Rc = 15 mm, at least 50% with Rc = 10 mm, at least 40% with Rc = 7.5 mm, and at least 40% with Rc = 5 mm. However, the numerical aperture of the optical fibre may be increased by more than 0.015 with respect to an equivalent $\alpha$-profile multimode optical fibre without a depressed trench. This can lead to losses in the case of connection to an optical fibre without a depressed trench.

It is also observed that an $\alpha$-profile multimode optical fibre having a depressed trench with a volume greater than -30 $\mu$m, shows an increase in the numerical aperture of less than 0.010 with respect to an equivalent $\alpha$-profile multimode optical fibre without a depressed trench. However, with a depressed trench having a volume greater than -30 $\mu$m, the bending losses for 2 turns @ 850 nm with respect to a fibre having a similar index profile but without depressed trench, are reduced by at best 40% for Rc = 15 mm, at best 30% for Rc = 10 mm, at best 20% for Rc = 7.5 mm, and at best 20% for Rc = 5 mm. The addition of a depressed trench is then less significant in reducing bending losses.

The optical fibre according to the invention has a depressed trench volume which allows an increase in the numerical aperture of less than 0.015, or even less than 0.010 when compared with an optical fiber having the same refractive index profile but without a depressed trench. In other words, the optical fibre according to the present invention limits the increase of the numerical aperature that is encounted due to the addition of a depressed trench. The bending losses in the optical fibre according to the invention for 2 turns @ 850 nm, with respect to an optical fibre having a similar index profile without a depressed trench, are reduced by at least 40% for Rc =1 5 mm, at least 30% for Rc = 10 mm, at least 20% for Rc = 7.5 mm, and at least 20% for Rc = 5 mm. Thus the fibre makes it possible to limit the increase in the numerical aperture with respect to a fibre without depressed trench, while allowing a significant reduction in the bending losses.

The optical fibre according to the present invention has a refractive index difference between the end of the graded central core and the outer optical cladding which is zero. The optical fibre according to the present invention thus has bending losses less than those of an optical fibre having a similar profile but the central core of which is extended beneath the outer optical cladding (according to WO-A-2006/010798 for example). For example, for small radii of curvature and for the higher-order modes, the optical fibre according to the present invention has bending losses ten times less with respect to an optical fibre having a similar refractive index profile but the central core of which is extended beneath the outer optical cladding.

The optical fibre according to the present invention comprises an inner cladding of radius $r_2$ comprised between the central core and the depressed trench, in order to improve the bandwidth of the optical fibre. Preferably, the radius $r_2$ is comprised between 0 and 5 $\mu$m in order to obtain a compromise between the improvement of the bandwidth of the optical fibre and the increase in production costs.

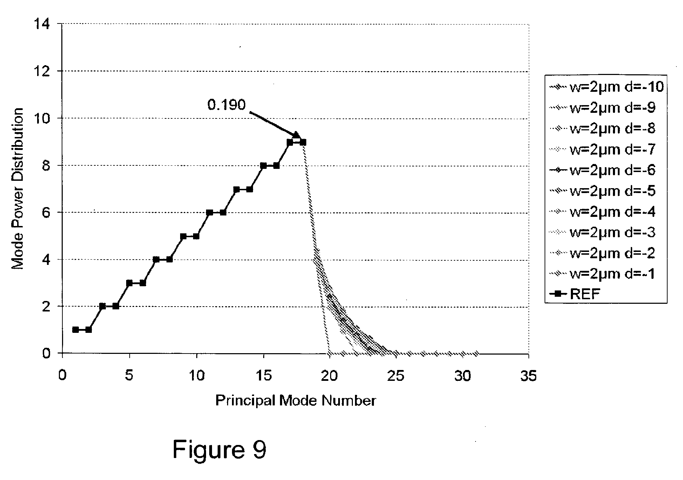

The curve in Figure 9 denoted "REF" is the reference curve characteristic of a graded-index optical fibre without a depressed trench. It is observed that the 18 first mode groups have an increasing power contribution. The 18th mode group is the mode group for which the effective refractive index is used as minimum effective refractive index $n_{eff,min}$ when calculating the numerical aperture of the optical fibre. A numerical aperture of 0.190 is then found.

In an example of an optical fibre according to the present invention, the optical fibre is composed of a central core, an inner cladding directly in contact with the latter, a depressed trench directly in contact with the inner cladding, and an outer optical cladding.

The optical fibre according to the present invention can have a central core diameter and a numerical aperture typical of a multimode fibre in order to allow a connection to a standard fibre. Thus the optical fibre can have for example a central core diameter of 62.5 +/- 3 $\mu$m and a numerical aperture of 0.275 +/- 0.015. The optical fibre can have for example a central core diameter of 50 +/- 3$\mu$m and a numerical aperture of 0.2 +/- 0.015.

The optical fibers according to the present invention may be manufactured by drawing from final preforms.

A final preform may be manufactured by providing a primary preform with an outer overcladding layer (i.e., an overcladding process). The outer overcladding layer consists of doped or undoped, natural or synthetic, silica glass. Several methods are available for providing the outer overcladding layer.

In a first example of a method, the outer overcladding layer may be provided by depositing and vitrifying natural or synthetic silica particles on the outer periphery of the primary preform under the influence of heat. Such a process is known, for example, from U.S. Patent Nos. 5,522,007; 5,194,714; 6,269,663; and 6,202,447.

In another example of a method, a primary preform may be overcladded using a silica sleeve tube, which may or may not be doped. This sleeve tube may then be collapsed onto the primary preform.

In yet another example of a method, an overcladding layer may be applied via an Outside Vapor Deposition (OVD) method. Here, a soot layer is first deposited on the outer periphery of a primary preform, and then the soot layer is vitrified to form glass.

The primary preforms may be manufactured via outside vapor deposition techniques, such as Outside Vapor Deposition (OVD) and Vapor Axial Deposition (VAD). Alternatively, the primary preforms may be manufactured via inside deposition techniques in which glass layers are deposited on the inner surface of a substrate tube of doped or undoped silica glass, such as Modified Chemical Vapor Deposition (MCVD), Furnace Chemical Vapor Deposition (FCVD), and Plasma Chemical Vapor Deposition (PCVD).

In an example of an embodiment, the primary preforms are manufactured using a PCVD process, which allows the shape of the central core's gradient refractive index profile to be controlled very precisely.

The depressed trench may be deposited on the inner surface of a substrate tube as part of the chemical vapor deposition process. More typically, the depressed trench may be manufactured either (i) by using a fluorine-doped substrate tube as the starting point of the internal deposition process for deposition of the gradient refractive index central core or (ii) by sleeving a fluorine-doped silica tube over the gradient refractive index central core, which itself may be produced using an outside deposition process (e.g., OVD or VAD).

In yet another example of an embodiment, a primary preform is manufactured via an inside deposition process using a fluorine-doped substrate tube. The resulting tube containing the deposited layers may be sleeved by one or more additional fluorine-doped silica tubes so as to increase the thickness of the depressed trench, or to create a depressed trench having a varying refractive index over its width. Although not required, one or more additional sleeve tubes (e.g., fluorine-doped substrate tubes) may be collapsed onto the primary preform before an overcladding step is carried out. The process of sleeving and collapsing is sometimes referred to as jacketing and may be repeated to build several glass layers on the outside of the primary preform.

Of course, the present invention is not limited to the embodiments described by way of example. The optical fibre according to the invention can be installed in numerous transmission systems having good compatibility with the other optical fibres of the system.

The optical fibre according to the present invention is disclosed in more detail in the claims.

**Claims**

1. A multimode optical fibre comprising, from the center to the periphery a central core, an inner cladding, a depressed trench, and an outer optical cladding, wherein

   - the central core has a radius $r_1$, and an alpha refractive index profile with a graded-index with respect to the outer optical cladding;
   - the inner cladding has a radius $r_2$ and a constant refractive index;
   - the depressed trench has a width $W_t$ and a refractive index difference $\Delta n_t$ with respect to the outer optical cladding, wherein

   the refractive index difference between the end of the alpha index profile of the central core and the outer optical cladding is zero, and wherein the volume V of the depressed trench, which volume is defined by the expression $V = 1000 \times Wt \times \Delta nt$, is comprised between -40 $\mu$m and -30 $\mu$m, **characterized in that** the refractive index difference of the depressed trench $\Delta n_t$ with respect to the outer optical cladding is between -7 x $10^{-3}$ and -10 x $10^{-3}$.

2. The fibre according to claim 1, wherein the optical fiber has an enlargement of the numerical aperture of less than 0.010 with respect to an optical fiber having the same refractive index profile without the depressed trench.

3. The fibre according to any one of the preceding claims, wherein the width $W_t$ of the depressed trench is smaller than 4.5 $\mu$m, preferably larger than 1.5 $\mu$m or even larger than 2 $\mu$m.

4. The fibre according to any one of the preceding claims, wherein the difference between radius $r_2$ of the inner cladding and radius $r_1$ of the central core is comprised between 0 and 5 $\mu$m.

5. The fibre according to claim 4, wherein the difference between radius $r_2$ of the inner cladding and radius $r_1$ of the central core is 0 $\mu$m and wherein the depressed trench is in direct contact with the central core.

6. The fibre according to any one of the preceding claims, wherein the central core has a diameter of 62.5 +/- 3 $\mu$m and a numerical aperture of 0.275 +/- 0.015.

7. The fibre according to any one of the claims 1 to 2, wherein the central core has a diameter of 50 +/- 3 $\mu$m and a numerical aperture of 0.2 +/- 0.015.

8. The fibre according to any one of the preceding claims, having bending losses at a wavelength of 850 nm for two turns around a radius of curvature of 15 mm reduced by at least 40% with respect to an optical fibre having the same index profile but without the depressed trench.

9. The fibre according to any one of the preceding claims, having bending losses at a wavelength of 850 nm for two turns around a radius of curvature of 10 mm reduced by at least 30% with respect to a fibre having the same index profile but without the depressed trench.

10. The fibre according to any one of the preceding claims, having bending losses at a wavelength of 850 nm for two turns around a radius of curvature of 7.5 mm reduced by at least 20% with respect to a fibre having the same index profile but without the depressed trench.

11. The fibre according to any one of the preceding claims, having bending losses at a wavelength of 850 nm for two turns around a radius of curvature of 5 mm reduced by at least 20% with respect to a fibre having the same index profile but without the depressed trench.

**Patentansprüche**

1. Mehrmoden-Lichtleitfaser mit, von der Mitte zum Umfang gesehen, einem mittigen Kern, einem inneren Mantel, einer eingedrückten Rinne und einem äußeren optischen Mantel, wobei

   - der mittige Kern einen Radius $r_1$ und ein Alpha-Brechungsindexprofil mit einem Gradientenindex hat, der auf den äußeren optischen Mantel bezogen ist;
   - der innere Mantel einen Radius $r_2$ und einen konstanten Brechungsindex hat;
   - die eingedrückte Rinne eine Breite $W_t$ und eine Brechungsindexdifferenz $\Delta n_t$ hat, die auf den äußeren optischen Mantel bezogen ist, wobei

   die Brechungsindexdifferenz zwischen dem Ende des Alpha-Indexprofils des mittigen Kerns und dem äußeren optischen Mantel null ist und wobei das Volumen V der eingedrückten Rinne, das durch den Ausdruck $V = 1000 \times Wt \times \Delta nt$ definiert ist, zwischen -40 μm und -30 μm beträgt, **dadurch gekennzeichnet, dass** die Brechungsindexdifferenz der eingedrückten Rinne $\Delta n_t$ bezogen auf den äußeren optischen Mantel zwischen $-7 \times 10^{-3}$ und $-10 \times 10^{-3}$ ist.

2. Faser nach Anspruch 1, wobei die Lichtleitfaser bezogen auf eine Lichtleitfaser, die das gleiche Brechungsindexprofil ohne die eingedrückte Rinne hat, eine Vergrößerung der numerischen Apertur von weniger als 0,010 aufweist.

3. Faser nach einem der vorhergehenden Ansprüche, wobei die Breite $W_t$ der eingedrückten Rinne kleiner als 4,5 μm, vorzugsweise größer als 1,5 μm oder sogar größer als 2 μm, ist.

4. Faser nach einem der vorhergehenden Ansprüche, wobei die Differenz zwischen dem Radius $r_2$ des inneren Mantels und dem Radius $r_1$ des mittigen Kerns zwischen 0 und 5 μm beträgt.

5. Faser nach Anspruch 4, wobei die Differenz zwischen dem Radius $r_2$ des inneren Mantels und dem Radius $r_1$ des mittigen Kerns 0 μm ist und wobei die eingedrückte Rinne in direktem Kontakt mit dem mittigen Kern steht.

6. Faser nach einem der vorhergehenden Ansprüche, wobei der mittige Kern einen Durchmesser von 62,5 +/- 3 μm und eine numerische Apertur von 0,275 +/- 0,015 hat.

7. Faser nach einem der Ansprüche 1 bis 2, wobei der mittige Kern einen Durchmesser von 50 +/- 3 μm und eine numerische Apertur von 0,2 +/- 0,015 hat.

8. Faser nach einem der vorhergehenden Ansprüche, wobei die Faser bezogen auf eine Lichtleitfaser mit dem gleichen Indexprofil, aber ohne eingedrückte Rinne, bei einer Wellenlänge von 850 nm und zwei Windungen mit einem Biegeradius von 15 mm Biegeverluste hat, die um wenigstens 40 % reduziert sind.

9. Faser nach einem der vorhergehenden Ansprüche, wobei die Faser bezogen auf eine Faser mit dem gleichen Indexprofil, aber ohne eingedrückte Rinne, bei einer Wellenlänge von 850 nm und zwei Windungen mit einem Biegeradius von 10 mm Biegeverluste hat, die um wenigstens 30 % reduziert sind.

10. Faser nach einem der vorhergehenden Ansprüche, wobei die Faser bezogen auf eine Faser mit dem gleichen Indexprofil, aber ohne eingedrückte Rinne, bei einer Wellenlänge von 850 nm und zwei Windungen mit einem Biegeradius von 7,5 mm Biegeverluste hat, die um wenigstens 20 % reduziert sind.

11. Faser nach einem der vorhergehenden Ansprüche, wobei die Faser bezogen auf eine Faser mit dem gleichen Indexprofil, aber ohne eingedrückte Rinne, bei einer Wellenlänge von 850 nm und zwei Windungen mit einem Biegeradius von 5 mm Biegeverluste hat, die um wenigstens 20 % reduziert sind.

**Revendications**

1. Fibre optique multimode comprenant, du centre vers la périphérie, un coeur central, une gaine intérieure, une tranchée enterrée, et une gaine optique extérieure, dans laquelle

   - le coeur central a un rayon $r_1$, et un profil d'indice de réfraction alpha avec un gradient d'indice par rapport à la gaine optique extérieure ;
- la gaine intérieure a un rayon $r_2$ et un indice de réfraction constant ;
- la tranchée enterrée a une largeur $W_t$ et une différence d'indice de réfraction $\Delta n_t$ par rapport à la gaine optique extérieure, dans laquelle

la différence d'indice de réfraction entre la fin du profil d'indice alpha du coeur central et la gaine optique extérieure est nulle, et dans laquelle le volume V de la tranchée enterrée, lequel volume est défini par l'expression $V = 1000 \times W_t \times \Delta n_t$, est compris entre -40 $\mu$m et -30 $\mu$m, **caractérisée en ce que** la différence d'indice de réfraction de la tranchée enterrée $\Delta n_t$ par rapport à la gaine optique extérieure est comprise entre $-7 \times 10^{-3}$ et $-10 \times 10^{-3}$.

2. Fibre selon la revendication 1, dans laquelle la fibre optique a un élargissement de l'ouverture numérique de moins de 0,010 par rapport à une fibre optique ayant le même profil d'indice de réfraction sans la tranchée enterrée.

3. Fibre selon l'une quelconque des revendications précédentes, dans laquelle la largeur $W_t$ de la tranchée enterrée est inférieure à 4,5 $\mu$m, de préférence supérieure à 1,5 $\mu$m ou même supérieure à 2 $\mu$m.

4. Fibre selon l'une quelconque des revendications précédentes, dans laquelle la différence entre le rayon $r_2$ de la gaine intérieure et le rayon $r_1$ dru coeur central est comprise entre 0 et 5 $\mu$m.

5. Fibre selon la revendication 4, dans laquelle la différence entre le rayon $r_2$ de la gaine intérieure et le rayon $r_1$ du coeur central est de 0 $\mu$m et dans laquelle la tranchée enterrée est en contact direct avec le coeur central.

6. Fibre selon l'une quelconque des revendications précédentes, dans laquelle le coeur central a un diamètre de 62,5 +/- 3 $\mu$m et une ouverture numérique de 0,275 +/- 0,015.

7. Fibre selon l'une quelconque des revendications 1 et 2, dans laquelle le coeur central a un diamètre de 50 +/- 3 $\mu$m et une ouverture numérique de 0,2 +/- 0,015.

8. Fibre selon l'une quelconque des revendications précédentes, ayant des pertes en courbure à une longueur d'onde de 850 nm pour deux enroulements autour d'un rayon de courbure de 15 mm diminuées d'au moins 40% par rapport à une fibre optique ayant le même profil d'indice mais sans la tranchée enterrée.

9. Fibre selon l'une quelconque des revendications précédentes, ayant des pertes en courbure à une la longueur d'onde de 850 nm pour deux enroulements autour d'un rayon de courbure de 10 mm diminuées d'au moins 30% par rapport à une fibre ayant le même profil d'indice mais sans la tranchée enterrée.

10. Fibre selon l'une quelconque des revendications précédentes, ayant des pertes en courbure à une longueur d'onde de 850 nm pour deux enroulements autour d'un rayon de courbure de 7,5 mm diminuées d'au moins 20% par rapport à une fibre ayant le même profil d'indice mais sans la tranchée enterrée.

11. Fibre selon l'une quelconque des revendications précédentes, ayant des pertes en courbure à une longueur d'onde de 850 nm pour deux enroulements autour d'un rayon de courbure de 5 mm diminuées d'au moins 20% par rapport à une fibre ayant le même profil d'indice mais sans la tranchée enterrée.

Figure 1

Figure 2

Figure 3

Figure 4

Figure 5

Figure 6

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080166094 A
- WO 2008085851 A
- WO 2006010798 A
- WO 2009078962 A
- WO 2010138653 A

- US 5522007 A
- US 5194714 A
- US 6269663 B
- US 6202447 B

**Non-patent literature cited in the description**

- **D. GLOGE et al.** Multimode theory of graded-core fibres. *Bell system Technical Journal,* 1973, 1563-1578

- **G. YABRE.** Comprehensive theory of dispersion in graded-index optical fibers. *Journal of Lightwave Technology,* February 2000, vol. 18 (2), 166-177